(19) **Europäisches Patentamt European Patent Office Office européen des brevets**

(11) **EP 3 815 894 B1**

(12) **EUROPEAN PATENT SPECIFICATION**

(45) Date of publication and mention of the grant of the patent:
**26.06.2024 Bulletin 2024/26**

(21) Application number: **19827084.5**

(22) Date of filing: **04.06.2019**

(51) International Patent Classification (IPC):
**B32B 7/022** (2019.01)   **B32B 3/26** (2006.01)
**B32B 5/02** (2006.01)   **B32B 5/26** (2006.01)
**B32B 15/14** (2006.01)

(52) Cooperative Patent Classification (CPC):
**B32B 5/02; B32B 3/26; B32B 5/022; B32B 5/26; B32B 7/022; B32B 15/14; B32B 15/18; B32B 15/20;** B32B 2250/02; B32B 2250/03; B32B 2250/20; B32B 2250/40; B32B 2260/021; B32B 2260/023; B32B 2260/046;          (Cont.)

(86) International application number:
**PCT/JP2019/022203**

(87) International publication number:
**WO 2020/003926 (02.01.2020 Gazette 2020/01)**

(54) **LAMINATED BODY**

LAMINIERTER KÖRPER

CORPS STRATIFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2018   JP 2018120570**

(43) Date of publication of application:
**05.05.2021   Bulletin 2021/18**

(73) Proprietor: **Toray Industries, Inc.**
**Tokyo 103-8666 (JP)**

(72) Inventors:
• **FUJIOKA, Takashi**
  **Iyo-gun, Ehime 791-3193 (JP)**
• **ADACHI, Kentaro**
  **Iyo-gun, Ehime 791-3193 (JP)**
• **HONMA, Masato**
  **Iyo-gun, Ehime 791-3193 (JP)**

(74) Representative: **Mewburn Ellis LLP**
**Aurora Building**
**Counterslip**
**Bristol BS1 6BX (GB)**

(56) References cited:
WO-A1-2006/028107     WO-A1-2006/028107
WO-A1-2015/029634     WO-A1-2015/029634
WO-A1-2017/110528     WO-A1-2017/110528
WO-A1-2017/110532     JP-A- S49 124 826

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B32B 2260/048; B32B 2262/0253;
B32B 2262/0261; B32B 2262/0269;
B32B 2262/0276; B32B 2262/101; B32B 2262/103;
B32B 2262/105; B32B 2262/106; B32B 2274/00;
B32B 2307/51; B32B 2307/558; B32B 2307/56;
B32B 2457/00; B32B 2509/00; B32B 2605/00

**Description**

TECHNICAL FIELD

The present invention relates to a layered article in which impact absorption for mitigating impact by external force is excellent and shape deformation is suppressed.

BACKGROUND ART

In recent years, market demands for improvement in stiffness and lightness are increasing year by year for industrial products such as automobiles, sports equipment, and electronic equipment. To meet these demands, fiber-reinforced plastics excellent in stiffness and lightness are widely used for various kinds of industrial applications. In these applications, products adapting to high-strength and high-stiffness members that utilize excellent mechanical properties of reinforcing fibers were mainly developed. On the other hand, applications of fiber-reinforced plastics have been rapidly developed in recent years, and attention is focused on applications that require flexibility and impact absorption in addition to applications that require strength and stiffness. In the development of fiber-reinforced plastics for such applications that make use of impact absorption, flexible members having reinforcing fibers and thermoplastic resin have been used (Patent Document 1).

On the other hand, a sandwich structure composed of a member having voids and a fiber-reinforced plastic has been proposed (see Patent Document 2).

Patent Documents 3 and 4 disclose a structure material including a resin, reinforced fibers and voids.

Patent Document 5 relates generally to a sandwich structure having a fiber reinforced component and a specific core component.

PRIOR ART DOCUMENTS

PATENT DOCUMENTS

Patent Document 1: Japanese Patent Laid-open Publication No. 2004-217829
Patent Document 2: WO 2015/029634 A
Patent Document 3: WO 2017/110532 A
Patent Document 4: WO 2017/110528 A
Patent Document 5: WO 2006/028107 A

SUMMARY OF THE INVENTION

PROBLEMS TO BE SOLVED BY THE INVENTION

The structure materials described in the above documents did not satisfy both exhibition of impact absorption and suppression of shape deformation. In addition, when used in a place where a person touches it, with what feeling the impact is transmitted have not been considered. Then, the present invention is made in view of the above problems, and an object thereof is to provide a layered article in which compression properties that are an index of impact absorption are improved and shape deformation is suppressed. Also, another object is to provide a layered article in which feeling when it receives impact is controlled as required.

SOLUTIONS TO THE PROBLEMS

In order to solve the above-mentioned problems, the layered article according to the present invention has a configuration as stated in claims 1-14.

EFFECTS OF THE INVENTION

According to the present invention, it is possible to provide a layered article in which shape deformation is suppressed by a skin layer formed on the surface, while having impact absorption resulting from properties of a porous structure material.

BRIEF DESCRIPTION OF THE DRAWINGS

Fig. 1(a) shows a schematic diagram of an example of a dispersion state of reinforcing fibers (A) when a reinforcing fiber mat (porous structure material) according to the present invention is viewed from the thickness direction of the mat. Fig. 1(b) shows a schematic diagram of an example of a dispersion state of the reinforcing fibers (A) viewed from the perpendicular direction to the thickness direction of the mat.
Fig. 2 shows a schematic diagram of an example of a section of reinforcing fibers (A) coated with resin (B) according to the present invention.
Fig. 3 shows schematic diagrams of an example of an apparatus used for a falling-weight impact test of a layered article according to the present invention.
Fig. 4(a) shows a schematic diagram of an example of a section of the porous structure material according to the present invention viewed from the perpendicular direction to the thickness direction of the porous structure material, and Fig. 4(b) shows a schematic diagram of a section in a direction orthogonal to the section shown in Fig. 4(a).
Fig. 5 shows a schematic diagram of an example of an apparatus for manufacturing the reinforcing fiber mat according to the present invention.

EMBODIMENTS OF THE INVENTION

Hereinafter, the layered article of the present invention will be described.
In the layered article of the present invention, a skin layer is formed on the surface of a porous structure material, and the porous structure material contains discontinuous reinforcing fibers (A) and resin (B) and voids (C), and has a certain level of elastic resilience. Further, the layered article has a plastic deformation amount of 15 um or less when a falling-weight impact test is performed on the surface on which the skin layer is formed under specific conditions. This makes it possible to achieve both exhibition of impact absorption and suppression of shape deformation.

[Reinforcing fiber (A)]

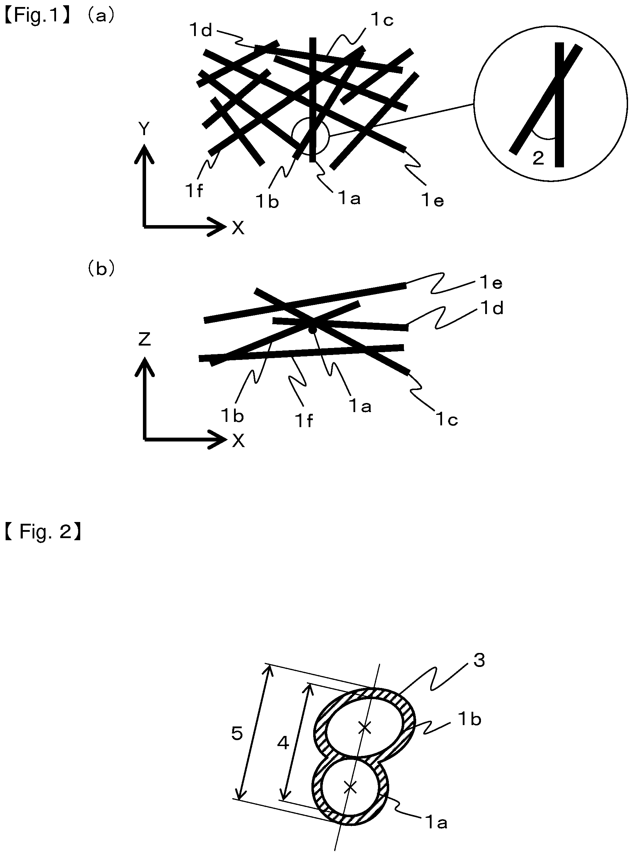

In the layered article of the present invention, the porous structure material has discontinuous reinforcing fibers (A). The discontinuous reinforcing fibers (A) are preferably dispersed in a nearly monofilament form and in a random manner in the porous structure material. The reinforcing fibers (A) are prepared as discontinuous fibers, whereby when a porous structure precursor or porous structure material is subjected to molding by applying an external force, shaping into a complex shape is facilitated. Further, since the reinforcing fibers (A) present as fiber bundles in the porous structure material are reduced by dispersing the reinforcing fibers (A) in a nearly monofilament form and in a random manner, weak portions at the end of the fiber bundles of the reinforcing fibers (A) can be minimized, and in addition to excellent reinforcing efficiency and reliability, isotropy is also provided.
Here, the nearly monofilament form indicates that a reinforcing fiber monofilament is present as small fineness as less than 500 strands. Further preferably, the reinforcing fiber monofilament is dispersed in a monofilament form. The monofilament form indicates that it is present as a monofilament. Further preferably, monofilament form single filaments are dispersed in a random manner.
The reinforcing fibers (A) being dispersed in a random manner refers to the fact that the arithmetic mean of oriented angles θs between arbitrarily selected reinforcing fibers (A) in the porous structure material (crossing angle between the reinforcing fibers) is within a range of 30° or more and 60° or less. The oriented angle θs refers to an angle formed by a single filament of the reinforcing fiber (A) and another single filament crossing this single filament in a plane direction of the substantially sheet-form porous structure material, and is defined as an angle on an acute angle side within a range of 0° or more and 90° or less out of angles formed by the single filaments crossing each other.
The oriented angle θs will be further described using the drawings. Fig. 1(a) shows a schematic diagram of an example of a dispersion state of the reinforcing fibers (A) when the porous structure material is viewed from the thickness direction. In this figure, when a single filament 1a is used as a reference, the single filament 1a crosses other single filaments 1b to 1f. Here, the "crossing" means a state in which a single filament as a reference is observed to cross other single filaments on a two-dimensional plane observed, does not necessarily require the single filament 1a and the single filaments 1b to 1f to be in contact with each other, and does not exclude a state in which the single filament 1a is observed to cross the single filaments 1b to 1f when viewed in a projected manner. That is, focusing on the single filament 1a as the reference, all the single filaments 1b to 1f are objects for which the oriented angle is evaluated, and in Fig. 1(a), the oriented angle is an angle 2 on the acute angle side within a range of 0° or more and 90° or less out of the two angles formed by the two crossing single filaments.
A method for measuring the oriented angle θs between the reinforcing fibers (A) in the plane direction is not particularly limited, and for example, a method can be exemplified that observes the orientation of the reinforcing fibers (A) from a surface of the structure element (porous structure material). In this case, the surface of the porous structure material is polished to expose the reinforcing fibers (A), whereby the reinforcing fibers (A) become easier to be observed. Also, a method that performs X-ray CT transmission observation to take an orientation image of the reinforcing fibers (A) can be also exemplified. For the reinforcing fibers (A) having high X-rays permeability, fibers for a tracer are mixed into the reinforcing fibers (A), or a chemical for a tracer is applied to the reinforcing fibers (A), whereby the reinforcing fibers (A) become easier to be observed, which is thus desirable. Further, when measurement is difficult to carry by the methods above, a method that puts the layered article into a high-temperature environment to burn off a resin component with a heating furnace and then observes the orientation of the reinforcing fibers (A) that have been taken out using an optical microscope or an electron microscope can be exemplified.

The mean of the oriented angles θs is measured by the following procedure. Specifically, the mean of the oriented angles is measured for all the single filaments (the single filaments 1b to 1f in Fig. 1) crossing a single filament (the signal filament 1a in Fig. 1) selected at random. For example, when there are a large number of other single filaments crossing a certain single filament, an arithmetic mean measured by selecting 20 from the other crossing single filaments at random may be substituted. This measurement is repeated a total of five times with reference to other single filaments, and its arithmetic mean is calculated as the arithmetic mean of the oriented angles.

The reinforcing fibers (A) are dispersed in a random manner, whereby the performance given by the reinforcing fibers (A) dispersed in a nearly monofilament form described above can be increased to the maximum. In addition, isotropy can be imparted to mechanical properties in the porous structure material. From this point of view, a fiber dispersion rate of the reinforcing fibers (A), that is, a proportion of randomly dispersed fibers in the reinforcing fibers (A) is preferably 90% by volume or more, and more preferably closer to 100% by volume. Also, the arithmetic mean of the oriented angles between the reinforcing fibers (A) is more preferably within a range of 40° or more and 50° or less and further preferably closer to 45°, which is an ideal angle. As a preferable range of the oriented angle, any value of the above upper limits may be set as an upper limit, and any value of the above lower limits may be set as a lower limit.

The reinforcing fibers (A) in the present invention preferably have a non-woven fabric-like form, in view of easiness of impregnation of the resin (B) into the reinforcing fibers (A). Furthermore, the reinforcing fibers (A) have a non-woven fabric-like form, whereby in addition to easy handleability of the non-woven fabric itself, impregnation can be made easy even in the case of using the high viscosity resin (B), which is thus preferable. The non-woven fabric-like form indicates a form in which strands and/or monofilaments of the reinforcing fibers (A) are dispersed irregularly in a planar form, and examples thereof include a chopped strand mat, a continuous strand mat, a paper-making mat, a carding mat, and an air-laid mat (hereinafter, collectively referred to as a reinforcing fiber mat).

The reinforcing fiber (A) has a mass-average fiber length Lf of 1 to 15 mm, which can enhance reinforcing efficiency of the reinforcing fiber (A) to the porous structure material, and give excellent mechanical properties to the porous structure material, which is thus preferable. When the reinforcing fibers (A) has a mass-average fiber length of less than 1 mm, the voids (C) in the porous structure material cannot be formed efficiently, thus a density may increase; in other words, it is difficult to obtain a porous structure material with a desired thickness even with the same mass, which is thus not preferable. On the other hand, when the reinforcing fibers (A) has a mass-average fiber length of longer than 15 mm, the reinforcing fibers (A) in the porous structure material are likely to bend by their self-weight, causing exhibition of mechanical properties to be hindered, which is thus not preferable. In view of reinforcing efficiency and density (lightness), the mass-average fiber length is preferably 3 mm or more, and further preferably 5 mm or more.

The resin (B) component in the porous structure material is removed by a method such as burning or eluting, 400 remaining reinforcing fibers (A) are selected at random, and the lengths of each of the reinforcing fibers are measured down to 10 um, and the mass-average fiber length can be calculated by the following formula.

$$\text{Mass-average fiber length Lf} = \Sigma(Li \times Wi/100)$$

$$Li: \text{Measured fiber length } (i = 1, 2, 3, ..., n)$$

Wi: Mass fraction of fibers with fiber length Li (i = 1, 2, 3, ..., n)

Examples of the reinforcing fibers (A) include metallic fibers formed of aluminum, brass, and stainless steel, PAN-based, rayon-based, lignin-based, and pitch-based carbon fibers, graphite fibers, insulating fibers formed of glass, organic fibers formed of aramid, PBO, polyphenylene sulfide, polyester, acrylic, nylon, and polyethylene, and inorganic fibers formed of silicon carbide, and silicon nitride. In particular, the reinforcing fiber (A) is preferably at least one selected from the group consisting of PAN-based carbon fibers, pitch-based carbon fibers, glass fibers, and aramid fibers, in view of a balance between mechanical properties and lightness when formed into a porous structure material. Further, the reinforcing fiber (A) may be subjected to surface treatment. Examples of the surface treatment include, treatment with coupling agents, treatment with sizing agents, treatment with banding agents, and adhesion treatment for additive agents, besides coating treatment with metal as a conductor. In addition, one of the reinforcing fiber (A) may be used alone, or two or more of them may be used in combination. Among them, PAN-based, pitch-based, and rayon-based carbon fibers, which are excellent in specific strength and specific stiffness, are preferably used in view of a weight reduction effect. Moreover, glass fibers are preferably used in view of increasing economic efficiency of the obtained porous structure material, carbon fibers and glass fibers are preferably used in combination in view of a balance between mechanical properties and economic efficiency in particular. Furthermore, aramid fibers are preferably used in view of increasing impact absorption and shaping properties of the obtained porous structure material, carbon fibers and aramid fibers are preferably used in combination in view of a balance between mechanical properties and impact absorption in particular. Further, reinforcing fibers coated with metal such as nickel, copper or ytterbium can also be used in view of increasing conductivity of the obtained porous structure material. Among them, PAN-based carbon fibers excellent in mechanical properties such as strength and elastic modulus can be more preferably used.

[Resin (B)]

The porous structure material of the present invention has the resin (B). Examples of the resin (B) include thermoplastic resins and thermosetting resins. Moreover, in the present invention, the thermosetting resin and the thermoplastic resin may be blended; in that case, a component with an amount exceeding 50% by mass of the components contained in the resin (B) becomes the name of the resin (B).

In view of giving a relatively hard feeling to the obtained porous structure material and layered article, among the above crystalline resins and amorphous resins, the resin (B) contains at least one selected from the group consisting of polyamide resin, polyphenylene sulfide resin, polyketone resin, polyetherketone resin, polyetheretherketone resin, polyetherketoneketone resin, polyethernitrile resin, fluoroplastic, liquid crystal polymer, polycarbonate resin, polymethyl methacrylate resin, polyphenylene ether resin, polyimide resin, polyamideimide resin, polyetherimide resin, polysulfone resin, and polyether sulfone resin. Such a resin with high mechanical properties called engineering plastic or super engineering plastic is used, whereby it is possible to obtain a layered article with excellent impact absorption, which is the effect of the present application, suppressed shape deformation, and also satisfactory lightness. On the other hand, although the effect of the present application can be exhibited even by using a resin called a general-purpose resin, flexibility of configuration of the porous structure material, and configuration of the skin layer is limited.

Further, in view of giving also a relatively soft feeling to the porous structure material and the layered article, it is preferable to use a resin that exhibits rubber elasticity at room temperature. The phrase "the resin (B) exhibits rubber elasticity at room temperature" refers to a feature that the resin (B) is deformed under room temperature and returns to its original shape after a stress required for the deformation is released. Specifically, a No. 1 dumbbell test piece described in JIS K6400 (2012) is subjected to extension and a stress required for the extension is released. Exhibiting rubber elasticity refers to elastic restoration to almost the original length after the release of the stress. The resin, however, is not necessarily completely restored to its original length but may have a dimensional change of 80% or more and 120% or less, preferably 90% or more and 150% or less after the stress required for the extension is released, with the dimension before the extension defined as 100%. The room temperature means 25°C. In order to exhibit rubber elasticity, in particular, the resin (B) preferably contains at least one selected from the group consisting of silicone rubber, ethylene propylene rubber, acrylonitrile butadiene rubber, chloroprene rubber, fluororubber, a polyolefin-based thermoplastic elastomer, a polyurethane-based thermoplastic elastomer, a polyester-based thermoplastic elastomer, and a polyamide-based thermoplastic elastomer.

In one mode of the present invention, the resin (B) desirably contains at least one or more thermosetting resins. Examples of the thermosetting resin include unsaturated polyesters, vinyl esters, epoxy resins, phenol resins, urea resins, melamine resins, thermosetting polyimides, copolymers and modified products thereof, and resins obtained by blending at least two of these.

In addition, the porous structure material according to the present invention may contain impact-resistant improvers such as elastomer or rubber components, other fillers, or additive agents to the extent that the objects of the present invention are not impaired. Examples of the fillers and additive agents include inorganic fillers, fire retardants, conductivity imparting agents, nucleators, ultraviolet absorbers, antioxidants, damping materials, antibacterial agents, insect repellents, deodorants, anti-coloring agents, thermal stabilizers, mold release agents, antistatic agents, plasticizers, lubricants, colorants, pigments, dyes, foaming agents, anti-foaming agents, and coupling agents.

In the porous structure material of the present invention, it is preferable that the resin (B) coat crossing points between the reinforcing fibers that are in contact with each other (the crossing points between the reinforcing fibers are hereinafter referred to as the crossing points). Further, the coating thickness of the resin (B) at crossing points of the reinforcing fiber (A) and another reinforcing fiber (A) is preferably within a range of 1 um or more and 15 um or less, in view of exhibiting elastic resilience from compression. As to the coated state of the crossing points coated with the resin (B), in view of shape stability of the porous structure material and exhibition of compression properties, coating at least crossing points of the single filaments of the reinforcing fibers (A) contained in the porous structure material with the resin (B) is sufficient, and as a more desirable manner, it is preferable that the periphery of the crossing points be also coated with the above thickness. This state means that the surface of the crossing points between the reinforcing fibers is not exposed owing to the resin (B); in other words, a wire-shaped coating of the resin (B) is formed on the reinforcing fibers (A). This formation further causes the porous structure material to have shape stability and makes exhibition of mechanical properties sufficient. In addition, as the coated state of the crossing points coated with the resin (B), the whole of the reinforcing fibers (A) is not required to be coated, and it may be coated within a range in which the shape stability and the compression modulus of the porous structure material according to the present invention are not impaired. For example, it is preferable that 50% or more of the crossing points formed between the reinforcing fibers that are in contact with each other be coated with the resin (B), and further preferably 80% or more in view of stability of exhibition of elastic resilience from compression.

Here, the resin (B) that coats the crossing points of the reinforcing fiber (A) and another reinforcing fiber (A) may be one or two or more of plural types of resins (B). Among them, it is preferable that the reinforcing fiber (A) be coated with a first resin (B), then further coated with a second resin (B), in view of handling properties of the reinforcing fiber, and effectively exhibiting elastic resilience from compression when formed into a porous structure material. The first resin (B) preferably has an effect of improving the handleability when it is combined with the second resin (B) by sealing the reinforcing fibers (A) which are discontinuous fibers. Furthermore, it is also preferable to have the effect of increasing affinity between the second resin (B) and the reinforcing fiber (A).

It is possible to measure the coated state (coating thickness) by cutting the porous structure material into a piece and observing a section of the piece with a device that allows observation at high magnification, such as a scanning electron microscope (SEM). For example, from an image obtained by observing and photographing the section with a 3,000-fold magnification with an SEM, it is possible to measure the coating thickness of the resin (B) coating crossing points between reinforcing fibers at any 50 locations showing cut sections of the reinforcing fibers (A) as shown in Fig. 2. Specifically, a thickness obtained by dividing by 2 a difference between distance 4 of a line segment passing through the centers of target reinforcing fibers (A) (two crossing reinforcing fibers (A)) and a line segment connecting two crossing points of the outermost surface of the reinforcing fibers (A) and distance 5 of the line segment passing through the centers of the reinforcing fibers (A) and a line segment connecting two crossing points of the outermost surface of the resin coating the reinforcing fibers (A) is defined as the coating thickness of the resin (B) at any point. A representative value of the thickness of the resin (B) coating the crossing points of the reinforcing fiber (A) and another reinforcing fiber (A) is obtained by using an arithmetic mean of the measurement results at the 50 locations. Incidentally, in the case of measurement when the reinforcing fiber (A) is coated with two types of resin, a crossing point of two reinforcing fibers (A) having no second resin (B) applied thereto (a crossing point of two reinforcing fibers (A) that are bound by the first resin (B) as described above) is preliminarily observed and photographed in the same manner as described above to obtain diameter (d1) of the crossing point, and a value is obtained by subtracting the diameter (d1) of the crossing point from diameter (d2) of a crossing point obtained from an image of the reinforcing fibers (A) having the second resin (B) applied thereto, whereby a further precise measurement result can be obtained. For the diameter of the crossing points, a maximum diameter of a section of crossing points obtained from an observation visual field is obtained. A fiber diameter in a direction perpendicular to the obtained maximum diameter was measured and arithmetically averaged to obtain the diameter of the crossing points and the diameter of the crossing points coated with the first resin (B) and/or the second resin (B).

The coating ratio with the resin (B) can be measured by cutting the porous structure material into a piece and observing a section of the piece with a device that allows observation at high magnification, such as a scanning electron microscope (SEM). For example, from any 400 locations obtained from an image obtained by observing and photographing the section with a 1,000-fold magnification with an SEM, it is possible to calculate the coating ratio in which the crossing point is coated with the resin (B) by dividing the number of crossing points coated by the resin (B) by the number of the measured crossing points (that is, 400). It is possible to obtain the coating ratio at less than 400 locations, but it is preferable to set it at 400 locations or more because an error between measuring persons can be reduced.

[Porous structure material]

The porous structure material in the present invention has voids (C). Further, density $\rho p$ is preferably 0.01 g/cm$^3$ or more and 1.3 g/cm$^3$ or less. When density $\rho p$ of the porous structure material is 1.3 g/cm$^3$ or less, it is possible to prevent an increase in mass in the case of a layered article and to ensure lightness, which is thus preferable. When density $\rho p$ of the porous structure material is 0.01 g/cm$^3$ or more, the density of the porous structure material itself is excellent, and it is possible to prevent the volume ratio of the reinforcing fiber (A) and the resin (B) component in the porous structure material from becoming too low. Therefore, it is preferable because it can be a layered article having a balance between elastic resilience and suppression of shape deformation, and from the above viewpoint, the density of the porous structure material is 0.03 g/cm$^3$ or more, and considering a balance between lightness, elastic resilience, and suppression of shape deformation, further preferably 0.1 g/cm$^3$ or more. Further, in view of lightness of the layered article, the density is preferably 1.0 g/cm$^3$ or less, and more preferably 0.8 g/cm$^3$ or less.

When the volume of the porous structure material of the present invention is defined as 100% by volume, the volume content of the voids (C) is preferably within a range of 10% by volume or more and 97% by volume or less. When the volume content of the voids (C) is 10% by volume or more, lightness of the porous structure material is satisfied, which is thus preferable. On the other hand, when the volume content of the voids (C) is 97% by volume or less, in other words, the thickness of the resin (B) coated around the reinforcing fibers (A) is sufficiently secured, and the reinforcing fibers (A) in the porous structure material are sufficiently reinforced with each other, thus mechanical properties can be improved, which is preferable.

Here, the voids (C) include a space formed by the reinforcing fibers (A) coated with the resin (B) serving as columnar supported bodies and overlapping with each other or crossing each other. For example, when a porous structure precursor in which the reinforcing fibers (A) are impregnated with the resin (B) in advance is heated to obtain a porous structure material, melting or softening of the resin (B) along with heating raises the reinforcing fibers (A) to form the voids (C). This is based on a characteristic of the reinforcing fibers (A) inside the porous structure precursor in a compressed state by pressurization rising by hair raising force caused by their elastic modulus. As another forming method, a physical foaming agent that foams due to the pressure discharge of compressed gas or physical change of gas, a chemical foaming agent that generates gas by thermal decomposition or chemical reaction is included in the porous structure precursor. Among them, a chemical foaming agent that produces nitrogen gas or carbonic acid gas through thermal decomposition is referred to as a thermal decomposition type chemical foaming agent. The thermal decomposition type chemical foaming agent is a compound that is liquid or solid at normal temperature and is a compound that decomposes or gasifies when being heated. Also, it is preferable that the thermal decomposition type chemical foaming agent be one that does not substantially interfere with a step of manufacturing the structure precursor used in the method for manufacturing a structure material according to the present invention, and the decomposition temperature of the thermal decomposition type chemical foaming agent is preferably within a range of 180°C to 250°C.

The porous structure material of the present invention is preferably an open-cell porous structure material having continuous voids (C) formed therein. With an open-cell porous structure material, it becomes easier to convert impact energy received when an external force is applied to the layered article into energy such as vibration and heat, and it is possible to improve impact absorption and suppress shape deformation. The term "continuous" refers that the voids are connected from one side to the other side, and also can be said to have breathability.

In the present invention, when the total volume content of the resin (B), the reinforcing fibers (A) and the voids (C) contained in the porous structure material is defined as 100% by volume, the volume content of the resin (B) in the porous structure material is preferably within a range of 2.5% by volume or more and 85% by volume or less. When the volume content of the resin (B) is 2.5% by volume or more, it is possible to bind the reinforcing fibers (A) in the porous structure material together to make the reinforcing effect of the reinforcing fibers (A) sufficient, and thus the mechanical properties, especially compression properties and bending properties, of the porous structure material can be satisfied, which is thus preferable. On the other hand, when the volume content of the resin (B) is 85% by volume or less, the amount of the resin is small and thus it is easy to form a void structure, which is thus preferable.

The volume content of the reinforcing fibers (A) in the porous structure material is preferably within a range of 0.5% by volume or more and 55% by volume or less. When the reinforcing fibers (A) are 0.5% by volume or more, it is possible to make the reinforcing effect derived from the reinforcing fibers (A) sufficient, which is thus preferable. On the other hand, when the volume content of the reinforcing fibers (A) is 55% by volume or less, the volume content of the resin (B) to the reinforcing fibers (A) is relatively high, and it is possible to bind the reinforcing fibers (A) in the porous structure material together to make the reinforcing effect of the reinforcing fibers (A) sufficient and to satisfy the mechanical properties, especially compression properties and bending properties of the porous structure material, which is thus preferable.

The porous structure material of the present invention has an elastic resilience from 50% compression of 1 MPa or more. This elastic resilience is measured by JIS K7220 (2006), and is the compressive strength when the porous structure material is compressed by 50% in the thickness direction. Since the elastic resilience from 50% compression in the thickness direction is 1 MPa or more, the porous structure material has excellent shape-retaining property, and thus has excellent handleability when attached to other members as a product, for example. Furthermore, in practical use, when the thickness direction of the porous structure material is used as the direction in which a load is applied, it can withstand a minor load, and further, when a load above a certain level is applied, the porous structure material deforms. Therefore, when the layered article is used as a product, it is preferable in that it is possible to mitigate an effect of impact on attached members and a person wearing it. The elastic resilience from 50% compression is practically no problem if it is 1 MPa or more, but is preferably 3 MPa or more, and further preferably 5 MPa or more. Although the upper limit of the elastic resilience is not particularly limited, it is preferably 50 MPa or less, more preferably 30 MPa or less, and further preferably 10 MPa or less. Within such ranges, it is easy to satisfy the viewpoint of a balance between compression properties, suppression of shape deformation, and lightness.

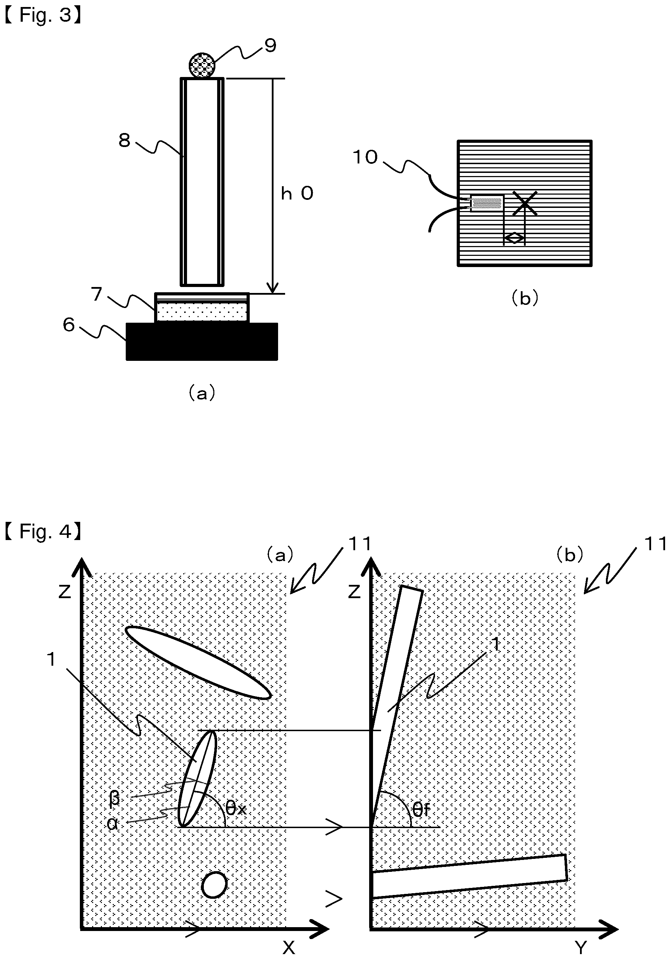

Further, in the present invention, oriented angle $\theta f$ of the reinforcing fibers (A) in a section in the thickness direction of the porous structure material (hereinafter referred to as the sectional direction) is preferably 60° or less, and is also preferably 3° or more. The oriented angle $\theta f$ is an index indicating the degree of inclination of the reinforcing fiber (A) with respect to the sectional direction of the porous structure material; in other words, the degree of inclination of the reinforcing fiber (A) with respect to the plane direction. In the section (x-z plane) in the thickness direction of the porous structure material, for example, a single filament 1 having a cut surface as shown in Fig. 4 (a) is standing from the cut surface, as shown in Fig. 4 (b) showing the depth direction (y direction). As described above, since the degree of inclination of the reinforcing fiber (A) is basically correlated with a sectional shape of the reinforcing fiber (A) in the section in the thickness direction, it can be calculated from the sectional shape of the reinforcing fiber (A).

The oriented angle $\theta f$ indicates that the larger the value, the more it stands upright with respect to the plane; the oriented angle $\theta f$ of the reinforcing fibers (A) is given in a range of 0° or more and 90° or less, but it is set in an appropriate range so as a reinforcing function in the porous structure material can be more effectively exhibited. The upper limit of the oriented angle $\theta f$ of the reinforcing fibers (A) is not particularly limited; in view of exhibition of a bending modulus when formed into the porous structure material, it is desirably 60° or less, and further more desirably 45° or less. Further, when the oriented angle $\theta f$ of the reinforcing fibers (A) is less than 3°, the reinforcing fibers (A) in the porous structure material are planar, in other words, are in a two-dimensionally oriented state. This state is not desirable because the state that the voids (C) are less formed and lightness cannot be satisfied. For this reason, the oriented angle $\theta f$ of the reinforcing fibers (A) is preferably 3° or more.

As a method for measuring the oriented angle $\theta f$ of the reinforcing fibers (A) in the sectional direction, basically the same method as the oriented angle $\theta s$ between the reinforcing fibers (A) in the plane direction can be exemplified. Above all, it is preferable to embed the porous structure material with an epoxy resin and polish the section for measurement. In calculating the oriented angle $\theta f$ from the sectional shape of the reinforcing fiber (A), a method of calculating from the sectional shape of the reinforcing fiber (A) (inclination $\theta x$ of long axis $\alpha$, aspect ratio $\alpha/\beta$ of long axis $\alpha$ and short axis $\beta$, etc.) can be used.

The porous structure material according to the present invention can be produced, for example, via a porous structure precursor obtained by impregnating a resin (B) into a mat-shaped reinforcing fibers (A) (hereinafter, simply referred to as a reinforcing fiber mat). As a method for producing a porous structure precursor, it is preferable to use a method of laminating a reinforcing fiber mat and a resin (B) and applying pressure in a state where the resin (B) is melted or heated above the softening temperature of the resin (B) to impregnate the reinforcing fiber mat with the resin (B), in view of easy production. As equipment for implementing the methods, a compression molding machine or a double belt press can be suitably used. When using a compression molding machine, a batch type is adopted, and adopting an intermittent press system arranging two or more machines for heating and cooling in a row can improve productivity. When using a double belt press, a continuous type is adopted, which can easily perform continuous processing and is thus excellent in continuous productivity. On the other hand, when the resin (B) is in the form of an aqueous solution or an emulsion, a method of adding the resin (B) to the reinforcing fiber mat by a method such as curtain coating or dipping and drying the water content or the solvent content can be adopted. However, as long as the resin (B) can be applied to the reinforcing fiber mat, it can be adopted regardless of the method.

[Skin layer]

The skin layer in the layered article of the present invention is a layer member formed on the surface of the porous structure material, and forms the layered article together with the porous structure material. The skin layer in the present invention preferably has a bending modulus higher than that of the porous structure material, in view of playing a role of assisting suppression of shape deformation of the layered article. Although not particularly limited, the bending modulus of the skin layer is preferably 3 times or more, more preferably 5 times or more, and further preferably 10 times or more of that of the porous structure material. Among them, it is preferable to contain at least one selected from the group consisting of stainless steel, aluminum alloy, magnesium alloy, titanium alloy, fiber-reinforced thermoplastic resin, and fiber-reinforced thermosetting resin. In particular, it is preferable to select fiber-reinforced thermoplastic resin or fiber-reinforced thermosetting resin having high specific stiffness. By using such a material, it is possible to achieve both impact absorption properties and suppression of shape deformation which are the effects of the present invention with a small amount of skin layer.

As the fiber-reinforced thermoplastic resin and the fiber-reinforced thermosetting resin, an intermediate sheet material (prepreg) in which the reinforcing fibers in a continuous form are impregnated with the thermoplastic resin or the thermosetting resin can also be used. The reinforcing fibers in a continuous form are reinforcing fibers continuous with a length of 100 mm or more at least in one direction and the state where a number of the reinforcing fibers arranged in one direction in an aggregate form, a so-called reinforcing fiber bundle, is continuous across the entire length of the layered article. Examples of the form of the intermediate sheet material formed of the reinforcing fibers in a continuous form are a fabric composed of reinforcing fiber bundles formed of many reinforcing fibers in a continuous form, a reinforcing fiber bundle in which a number of the reinforcing fibers in a continuous form are arranged in one direction (a unidirectional fiber bundle), and a unidirectional fabric composed of this unidirectional fiber bundle. The reinforcing fibers may be composed of a plurality of fiber bundles of the same form or composed of a plurality of fiber bundles of different forms. The number of the reinforcing fibers included in one reinforcing fiber bundle is normally 300 to 48,000; considering the manufacture of prepregs and the manufacture of fabrics, the number is desirably 300 to 24,000 and more desirably 1,000 to 12,000.

At this time, a ratio tp/ts of thickness tp of the porous structure material and thickness ts of the skin layer is 10 or more. In view of lightness of the layered article, tp/ts is more preferably 15 or more, and further preferably 20 or more. Although not particularly limited, 30 is satisfactory in view of a balance between suppression of shape deformation and lightness.

[Layered article]

The layered article in the present invention is a layered article formed by laminating the skin layer on the surface of the porous structure material, having a plastic deformation amount of 15 um or less in a falling-weight impact test performed on the surface on which the skin layer is formed. When the plastic deformation amount is 15 um or less, it is possible to obtain a layered article excellent in suppressing shape deformation. When the plastic deformation amount exceeds 20 mm, it is possible to easily visually confirm that shape deformation (dent) has occurred on the surface of the layered article, and a product using the layered article of the present invention cannot exhibit inherent properties or the value of the product is reduced in some cases. The plastic deformation amount is further preferably 10 um or less, and generally the smaller the better. Here, in the falling-weight impact test in the present invention, with respect to a layered article 7 fixed to a metal plate 6 as shown in Fig. 3(a), a steel ball 9 of grade G40 (mass: 32.7 g) with a nominal diameter of 20 mm specified in JIS B1501 (2009) is caused to fall freely from a height of 300 mm toward the center of the surface on which the skin layer is formed. Here, the plastic deformation amount refers to a value calculated by the following formula from a value obtained by measuring the thickness of the layered article before and after the falling-weight impact test with a micrometer.

Plastic deformation amount:

$$\Delta t \ [\mu m] \ = \ (t0 \ - \ t1)$$

Thickness of layered article before falling-weight impact test: t0
Thickness of layered article after falling-weight impact test: t1

Also, the layered article in the present invention preferably has a plastic deformation rate of $30 \times 10^{-6}$ or less in a falling-weight impact test performed on the surface on which the skin layer is formed. Here, the plastic deformation rate refers to a strain measured 5 seconds after dropping the steel ball 9 on the layered article by attaching a strain gauge 10 to the skin layer surface of the layered article 7 as shown in Fig. 3(b) in the falling-weight impact test. When the plastic deformation rate exceeds $30 \times 10^{-6}$, shape deformation (dent) has occurred on the surface of the layered article, and a product using the layered article of the present invention cannot exhibit inherent properties or the value of the product is reduced in some cases. The plastic deformation rate is further preferably $20 \times 10^{-6}$ or less and more preferably $10 \times 10^{-6}$ or less, and the smaller the better.

The layered article in the present invention preferably has an elastic deformation rate of $100 \times 10^{-6}$ or more in a falling-weight impact test performed on the surface on which the skin layer is formed. Here, the elastic deformation rate refers to a peak value of strain when the steel ball 9 comes in contact with the layered article 7 by attaching a strain gauge 10 to the skin layer surface of the layered article 7 as shown in Fig. 3(b) in the falling-weight impact test and dropping the steel ball 9 on the layered article 7. When the elastic deformation rate is less than $100 \times 10^{-6}$, it indicates that the shape change of the layered article is small, and when receiving an external force from one skin layer surface of the layered article, it will be transmitted to the other layered article without mitigating the impact, so the required impact absorption is not obtained. The elastic deformation rate is more preferably $500 \times 10^{-6}$ or more, and further preferably $1000 \times 10^{-6}$ or more, in view of impact absorption and in view of obtaining a softer feeling. Although not particularly limited, when the elastic deformation rate is large, a soft feeling is obtained, but the layered article may be largely deformed. When the elastic deformation rate is $3000 \times 10^{-6}$, compression properties and suppression of shape deformation can be satisfied.

The layered article in the present invention preferably has a repulsion elasticity of 30% or more in a falling-weight impact test performed on the surface on which the skin layer is formed. When the repulsion elasticity is 30% or more, excessive shape deformation of the layered article can be suppressed. When the repulsion elasticity is less than 30%, impact by external force is excessively absorbed, and it also can be said that the layered article is largely deformed. Therefore, when it is used as a product, it is necessary to design the layered article to have a large thickness. The repulsion elasticity is more preferably 40% or more, and further preferably 50% or more. Here, the repulsion elasticity refers to a value calculated by heights of steel ball before and after the test in the falling-weight test and the following formula.

$$\text{Repulsion elasticity [\%] = (h1/h0)} \times 100$$

Height of steel ball before falling-weight impact test: h0
Height of steel ball after falling-weight impact test: h1

The layered article of the present invention preferably has a sandwich structure in which the skin layers are arranged on both surfaces of the porous structure material. Above all, the layered article of the present invention more preferably has a configuration which is symmetrical from the central axis in the thickness direction of the layered article (symmetrical structure). With such a structure, when the layered article of the present invention is applied to a product, it becomes possible to enhance the flexibility of design without limiting the surface that receives external force. At this time, the skin layer may be also arranged on the side surface of the layered article.

Hereinafter, the present invention will be described more specifically with reference to examples. The examples are according to the invention while the reference examples are not forming part of the invention.

EXAMPLES

(1) Elastic resilience from 50% compression of porous structure material

A test piece was cut out from a porous structure material, and a compression property of the porous structure material was measured with reference to JIS K7220 (2006). At this time, it is preferable to peel off the skin layer from a layered article to leave the porous structure material only. However, when the thickness of the skin layer does not change during the compression test, the layered article may be evaluated as it is. Test pieces were cut out at a length of 25 $\pm$ 1 mm and a width of 25 $\pm$ 1 mm. The compression property of the obtained test piece was measured using a universal testing machine. At this time, compression strength $\sigma$ m was calculated by the following formula using force Fm indicated by the universal testing machine when reaching 50% of the thickness before the test and bottom sectional area A0 of the test piece before the test, and was defined as elastic resilience. As to a measuring apparatus, "INSTRON" (registered trademark) model 5565 universal material testing system (manufactured by INSTRON JAPAN Co., Ltd.) was used. This measurement was repeated 5 times in total, and their arithmetic mean was calculated as the elastic resilience from 50% compression of the porous structure material.
Elastic resilience:

$$\sigma \text{ m [MPa] = Fm [N]/A0 [mm}^2\text{]}$$

(2) Plastic deformation amount of layered article: $\Delta$t

Test pieces of 100 $\pm$ 1 mm long and 100 $\pm$ 1 mm wide were cut out from the layered article. A cut-out test piece 7 was fixed to a metal plate 6 as shown in Fig. 3, a steel ball 9 of grade G40 (mass: 32.7 g) with a nominal diameter of 20 mm specified in JIS B1501 (2009) was caused to fall freely from a height of 300 mm toward the center of the surface on which the skin layer was formed to perform a falling-weight impact test. A value was calculated by the following formula from the thickness of the layered article before and after the falling-weight impact test measured with a micrometer and defined as a plastic deformation amount of the layered article. This measurement was repeated 10 times in total, and their arithmetic mean was calculated as the plastic deformation amount of the layered article.
Plastic deformation amount:

$$\Delta t \ [\mu m] \ = \ t0 \ - \ t1$$

Thickness of layered article before falling-weight impact test: t0
Thickness of layered article after falling-weight impact test: t1

(3) Plastic deformation rate of layered article

In the falling-weight impact test to measure the plastic deformation amount of the layered article of (2) above, a strain gauge was attached at a position 15 mm away from the center position on the skin layer surface of the cut-out test piece, and change in a resistance value ($\Omega$) during the falling-weight impact test was measured to calculate strain. At this time, a value of strain 5 seconds after the falling-weight impact test was defined as a plastic deformation rate of the layered article. This measurement was repeated 10 times in total, and an arithmetic mean of the strain values was calculated as the plastic deformation rate of the layered article.

(4) Elastic deformation rate of layered article

In the falling-weight impact test for measuring the plastic deformation rate of the layered article of (3) above, the peak value of strain when the steel ball comes into contact with the test piece was defined as an elastic deformation rate of the layered article. This measurement was repeated 10 times in total, and an arithmetic mean of the peak values was calculated as the elastic deformation rate of the layered article.

(5) Repulsion elasticity of layered article

In the falling-weight impact test for measuring the plastic deformation rate of the layered article of (3) above, height h1 of rebound of the steel ball after coming into contact with the test piece was measured. At this time, the repulsion elasticity of the layered article was calculated by the following formula from the heights of the steel ball before and after the falling-weight impact test. This measurement was repeated 10 times in total, and an arithmetic mean calculated by the height and the following formula was calculated as the repulsion elasticity of the layered article.

$$Repulsion \ elasticity \ [\%] \ = \ (h1/h0) \ \times \ 100$$

Height of steel ball before falling-weight impact test: h0
Height of steel ball after falling-weight impact test: h1

(6) Bending test of porous structure material and skin layer

After separating the porous structure material and the skin layer constituting the layered article from the layered article, each test piece was cut out and the bending modulus was measured according to ISO178 method (1993). As to the test pieces, test pieces cut out in four directions including a 0° direction freely set and +45°,-45°, and 90° directions were prepared. The number of measurement n = 5 was set for each of the directions, and its arithmetic mean was defined as a bending modulus Ec. As to a measuring apparatus, "INSTRON" (registered trademark) model 5565 universal material testing system (manufactured by INSTRON JAPAN Co., Ltd.) was used.

(7) Thicknesses of porous structure material and skin layer

Five test pieces of 10 mm long and 10 mm wide were cut out from the layered article, and magnified 400 times and observed with a laser microscope (VK-9510, manufactured by Keyence Corporation). An observed image was developed onto general-purpose image analysis software, the thicknesses of the porous structure material and the skin layer visible in the observed image were measured using a program incorporated in the software. The thicknesses of the members were measured at ten sites at equal intervals from the longitudinal or lateral end of the sample piece. The thicknesses of the members were determined by an arithmetic mean from the thicknesses of 50 sites in total taken at ten sites on five test pieces, and defined as thickness tp of the porous structure material and thickness ts of the skin layer, and the thickness ratio was calculated by the obtained thicknesses and the following formula.

Ratio of thickness of porous structure material and thickness of skin layer = tp/ts

Thickness of porous structure material: tp
Thickness of skin layer: ts

(8) Volume content of voids (C) in porous structure material: Va

A test piece of 10 mm long and 10 mm wide was cut out from the layered article, and a section was observed with a scanning electron microscope (SEM) (model S-4800 manufactured by Hitachi High-Technologies Corporation) to photograph ten sites at equal intervals to the thickness direction from the surface of the layered article with a 1,000-fold magnification so that at least the porous structure material in the layered article occupied the entire image. For each image, an area Aa of voids within the image was determined. The area Aa of each void was divided by the area of the entire image to calculate a porosity. The volume content of the voids of the porous structure material was determined by an arithmetic mean from the porosity at a total of 50 sites photographed at ten sites each for five test pieces.

(9) Density of porous structure material: $\rho p$

The skin layer was peeled off from the layered article, and only the porous structure material was taken out. A test piece was cut out from the obtained porous structure material, and an apparent density of the porous structure material was measured with reference to JIS K7222 (2005). The dimensions of the test piece were 100 mm long and 100 mm wide. The length, width, and thickness of the test piece were measured with a micrometer, and a volume V of the test piece was calculated from the obtained value. Moreover, a mass M of the cut-out test piece was measured with an electronic balance. The obtained mass M and volume V were substituted into the following formula to calculate a density $\rho p$ of the porous structure material. This measurement was repeated 5 times in total, and an arithmetic mean of the values calculated by the mass and volume thereof and the following formula was calculated as the density of the porous structure material.

$$\rho p \ [g/cm^3] \ = \ M \ [g]/V \ [cm^3]$$

(10) Coating thickness of resin (B) in porous structure material

A test piece of 10 mm long and 10 mm wide was cut out from the layered article, and a part of a porous structure material in a section of the layered article was observed with a scanning electron microscope (SEM) (model S-4800 manufactured by Hitachi High-Technologies Corporation) to photograph any ten sites with a 3,000-fold magnification. In each of the obtained images, any 5 locations showing cut sections of crossing points of the reinforcing fibers (A) were selected, the coating thicknesses of the resin (B) coating at the crossing points of the reinforcing fibers (A) were measured, and the arithmetic mean of a total of 50 sites was defined as the coating thickness of the resin (B).

(11) Tensile properties of resin (B)

A tensile test was performed with reference to the method described in JIS K6400 (2012), and the presence or absence of rubber elasticity of the resin (B) was evaluated. In the same test, a stress was released at the time of 200% extension (100% of the length of the test piece as a reference), and whether or not the shape returned to 150% or less was visually confirmed. When it returned to 150% or less, it was defined as "Present", and when it exceeded 150% or the test piece was broken, it was defined as "Absent".
As a test piece, a No. 1 dumbbell test piece shape was prepared and used for the test. Regarding the test piece, as to a resin (B) exhibiting thermoplasticity, a test piece was prepared by injection molding. Further, as to a resin (B) which shows a liquid property at room temperature, the resin (B) was poured into a mold having a concave portion having the same shape as the No. 1 dumbbell test piece, and the mold was closed, followed by curing at a temperature/hour for crosslinking or curing to prepare a test piece.

(12) Volume content Vf of reinforcing fiber (A) in porous structure material

After separating the porous structure material and the skin layer constituting the layered article from the layered article, only the porous structure material was cut into a length of 10 mm and a width of 10 mm. After a mass Ws of a porous structure material was measured, the porous structure material was heated at 500°C for 30 minutes in the air to burn off a resin (B) component, a mass Wf of remaining reinforcing fibers (A) was measured, and a volume content Vf was calculated by the following formula. At this time, for the densities of the reinforcing fiber (A) and the resin (B), the measurement according to a method of weighing in liquid of JIS Z8807 (2012) (using liquid as a standard substance) was carried and the results were used.

Vf (% by volume) = (Wf/$\rho$f) / (Wf/$\rho$f + (Ws - Wf) / $\rho$r) $\times$ 100

$\rho$f: Density of reinforcing fibers (A)
$\rho$r: Density of resin (B)

(13) Volume content of resin (B) in porous structure material: Vr

Using the values of the volume content Va of the voids (C) in the porous structure materials determined by the method of (8) and the volume content Vf of the reinforcing fibers (A) by the method of (12), a volume content Vr of the resin (B) was obtained by the following formula.

$$Vr \text{ (\% by volume) of resin (B)} = 100 - (Vf + Va)$$

Vf: Volume content of reinforcing fibers (A) (% by volume)
Va: Volume content of voids (C) (% by volume)
Vr: Volume content of resin (B) (% by volume)

(14) Coating ratio of resin (B) in porous structure material

A test piece of 10 mm long and 10 mm wide was cut out from the layered article, and a site of a porous structure material in a section of the layered article was observed with a scanning electron microscope (SEM) (model S-4800 manufactured by Hitachi High-Technologies Corporation) to photograph any ten sites with a 1,000-fold magnification. From the obtained image, 40 crossing points of the reinforcing fibers (A) were arbitrarily selected, the number of crossing points coated by the resin (B) was counted, and defined as the coating ratio of the resin (B) (%) by the following formula.

$$\text{Coating ratio of resin (B) (\%)} = (C2/C1) \times 100$$

C1: Number of measured crossing points (40)
C2: Number of crossing points (pieces) coated by resin (B) in C1

(15) Oriented angle $\theta$f of reinforcing fibers (A) in sectional direction of porous structure material

A 25 mm square piece was cut out from the layered article, embedded in an epoxy resin, and then polished so that the vertical section in the thickness direction of the layered article was an observation surface to prepare a sample. The site in the porous structure material of the sample was magnified 400 times with a laser microscope (VK-9510, manufactured by KEYENCE CORPORATION), and the fiber sectional shape was observed. An observed image was developed onto general-purpose image analysis software, an individual fiber section visible in the observed image was extracted using a program incorporated in the software, an ellipse inscribed in the fiber section was provided, and the shape of the fiber section was approximated thereto (hereinafter, referred to as a fiber ellipse). Furthermore, for a fiber ellipse with an aspect ratio, which is represented by a major axial length $\alpha$/a minor axial length $\beta$ of the fiber ellipse, of 20 or more, an angle formed by the plane direction of the layered article (X direction or Y direction) and a major axial direction of the fiber ellipse was determined. The operation was repeated for samples to be observed extracted from different parts of the porous structure material, whereby oriented angles were measured for a total of 600 reinforcing fibers (A), and their arithmetic mean was determined to be the oriented angle $\theta$f of the reinforcing fibers (A).

(16) Oriented angle $\theta$s of reinforcing fibers (A) in plane direction of porous structure material (crossing angle between reinforcing fibers)

After separating the porous structure material and the skin layer constituting the layered article from the layered article, a 25 mm square piece was cut out from the porous structure material, and both surfaces were covered with mesh so that the remaining reinforcing fibers did not move when a resin component was burned off under the conditions described below. Then, the piece was put into an electric furnace at 450°C for 30 minutes to burn off the resin. The remaining reinforcing fibers (A) were magnified 400 times with a laser microscope (VK-9510 manufactured by KEYENCE CORPORATION), and the oriented angles with all the single filaments crossing a certain single filament selected at random were measured. Similarly, the oriented angles of a total of 20 reinforcing fibers (A) were measured, and their arithmetic mean was determined as the oriented angle θs of the reinforcing fibers (A) in the plane direction of the porous structure material.

At this time, when the oriented angle θs was within a range of 30° or more and 60° or less, the reinforcing fibers (A) were determined to be "dispersed in a random manner".

(17) Mass-average fiber length Lf of reinforcing fiber (A)

400 fibers were randomly selected from the reinforcing fibers (A) obtained by the measurement of "the volume content Vf of the reinforcing fibers (A) in the porous structure material" of (12) above, the lengths thereof was measured up to 10 um unit, and a value calculated from these lengths was defined as the mass-average fiber length Lf of the reinforcing fibers (A).

The following materials were used in the examples and comparative examples below. The examples are according to the invention while the reference examples are not forming part of the invention.

[Carbon Fibers]

A copolymer with polyacrylonitrile as a main component was subjected to spun processing, calcination processing, and surface oxidation treatment processing to obtain a continuous carbon fiber with a total monofilament number of 12,000. The properties of the continuous carbon fibers were as follows.

Specific gravity: 1.8
Tensile strength: 4900 MPa
Tensile modulus: 2300 GPa
Tensile elongation at break: 2.1%

[Polyester resin]

A resin film having a basis weight of 111 g/m$^2$ made of a thermoplastic polyester resin ("Hytrel" (registered trademark) 5557 manufactured by Toray Industries, Inc.) was prepared and used as the resin (B). The properties of the obtained resin film are shown in Table 1.

[Polyphenylene sulfide resin]

A resin film having a basis weight of 141 g/m$^2$ made of polyphenylene sulfide resin ("TORELINA (registered trademark) M2888 manufactured by Toray Industries, Inc. was prepared and used as the resin (B). The properties of the obtained resin film are shown in Table 1.

[Polypropylene resin]

A film with a basis weight of 100 g/m$^2$ made of 80% by mass of an unmodified polypropylene resin ("Prime Polypro" (registered trademark) J105G manufactured by PRIME POLYMER Co., Ltd.) and 20% by mass of an acid-modified polypropylene resin ("ADMER" QB510 manufactured by Mitsui Chemicals, Inc.) was prepared and used as the resin (B). The properties of the obtained resin film are shown in Table 1.

[Polycarbonate resin]

A resin film having a basis weight of 120 g/m$^2$ made of polycarbonate resin ("Iupilon (registered trademark) H-4000 manufactured by Mitsubishi Engineering-Plastics Corporation" was prepared and used as the resin (B). The properties of the obtained resin film are shown in Table 1.

[Expanded polypropylene resin]

A non-crosslinked low-expanded polypropylene seat ("EFCELL" (registered trademark) CP3050 manufactured by Furukawa Electric Co., Ltd.) was used as the porous structure material (Comparative Example 3). The properties are shown in Table 4.

[Prepreg]

A thermosetting resin sheet ("TORAYCA" (registered trademark) prepreg P3252S-10 manufactured by Toray Industries, Inc.) in which carbon fibers were oriented in one direction as reinforcing fibers was cut into a required size and used as the prepreg.

(Reference Example 1)

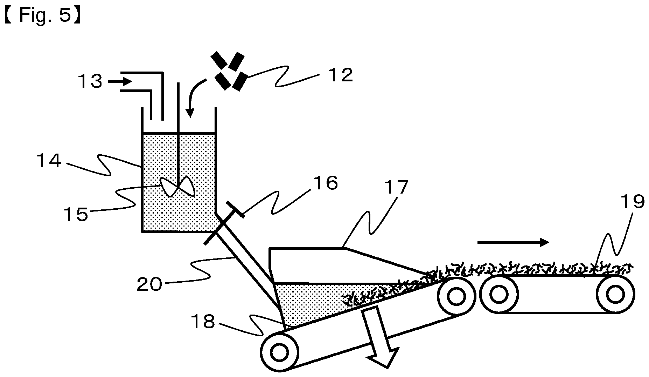

Using a carbon fiber as the reinforcing fiber (A), it was cut into 6 mm with a strand cutter to obtain chopped carbon fibers. A dispersion with a concentration of 0.1% by mass containing water and a surfactant (polyoxyethylene lauryl ether (product name) manufactured by NACALAI TESQUE, INC.) was prepared. Using this dispersion and the chopped carbon fibers, a reinforcing fiber mat was manufactured. As shown in Fig. 5, the manufacturing apparatus of the reinforcing fiber mat includes a cylindrical vessel (dispersing tank 14) with a diameter of 1,000 mm having an opening cock 16 at the lower part, a paper-making tank 17, and a linear transportation unit 20 (an inclination angle of 30°) connecting the dispersing tank 14 and the paper-making tank 17. A stirrer 15 was attached to an opening at the top surface of the dispersing tank 14, and the chopped carbon fibers (reinforcing fibers 12) and the dispersion (dispersion medium 13) could be charged from the opening. The paper-making tank 17 included a mesh conveyor 18 having a paper-making face with a width of 500 mm on its bottom, and a conveyor 19 that can convey a carbon fiber substrate (a paper-making substrate) is connected to the mesh conveyor 18. Paper making was performed with a carbon fiber concentration in the dispersion of 0.05% by mass. The reinforcing fiber mat after paper making was dried in a drying oven at 200°C for 30 minutes to obtain a reinforcing fiber mat. The basis weight of the carbon fibers of the obtained reinforcing fiber mat was 50 g/m$^2$.

A preform Ip was prepared in which eight sheets of reinforcing fiber mat as the reinforcing fibers (A) and nine sheets of polyester resin film as the resin (B) were arranged in order of [resin film/reinforcing fiber mat/resin film/reinforcing fiber mat/resin film/reinforcing fiber mat/resin film/reinforcing fiber mat/resin film/ reinforcing fiber mat/resin film/reinforcing fiber mat/resin film/reinforcing fiber mat/resin film/reinforcing fiber mat/resin film]. A preform for obtaining the porous structure material is referred to as the preform Ip, and the same applies hereafter. Subsequently, a porous structure precursor was obtained through the following processes (1) to (4).

(1) The preform Ip is arranged in a mold cavity for press molding preheated to 220°C and the mold is closed.
(2) Subsequently, after being maintained for 120 seconds, the mold is maintained for additional 60 seconds with a pressure of 3 MPa applied.
(3) The cavity temperature was cooled to 50°C while maintaining the pressure.
(4) The mold is opened to take out the porous structure precursor.

A preform II was prepared using the above prepreg P3252S-10 as skin layers together with the porous structure precursor arranged in order of [prepreg (0° direction)/prepreg (90° direction)/porous structure precursor]. A preform for obtaining the layered article is referred to as preform II, and the same applies hereafter. Subsequently, a layered article was obtained through the following processes (5) to (9). The properties are shown in Table 2.

(5) The preform II is arranged in a mold cavity for press molding preheated to 220°C and the mold is closed.
(6) Subsequently, a pressure of 1 MPa is applied and maintained for 15 minutes.
(7) After the process (6), the mold cavity is opened, a metal spacer is inserted at its end, and the thickness of the layered article is adjusted to be 5.0 mm.
(8) Thereafter, the mold cavity is fastened again, and the cavity temperature is cooled to 50°C while maintaining the pressure.
(9) The mold is opened to take out the layered article.

(Reference Example 2)

A layered article was obtained in the same manner as in Reference Example 1 except that the number of sheets of prepreg P3252S-10 to be the skin layer was set to 3, the layered structure of the preform II was made as [prepreg (0° direction)/prepreg (90° direction)/prepreg (0° direction)/porous structure precursor], and the thickness of the layered article was adjusted to 5.1 mm. The properties are shown in Table 2.

(Reference Example 3)

A layered article was obtained in the same manner as in Example 1 except that two sheets of the porous structure precursor prepared in (1) to (4) of Reference Example 1 were used to form the preform II by laminating in order of [prepreg (0° direction)/prepreg (90° direction)/porous structure precursor/porous structure precursor] The properties are shown in Table 2.

(Reference Example 4)

A layered article was obtained in the same manner as in Reference Example 1 except that three sheets of the porous structure precursor prepared in (1) to (4) of Reference Example 1 were used to form the preform II by laminating in order of [prepreg (0° direction)/prepreg (90° direction)/porous structure precursor/porous structure precursor/porous structure precursor]. The properties are shown in Table 2.

(Example 5)

A preform Is using two sheets of the above prepreg P3252S-10 arranged in order of [prepreg (0° direction)/prepreg (90° direction)] was arranged in a mold cavity for press molding preheated to 160°C and the mold was closed. A preform for obtaining the skin layer is referred to as the preform Is, and the same applies hereafter. Subsequently, a pressure of 0.5 MPa was applied and maintained for 30 minutes, and after 30 minutes, the mold was opened to take out the cured prepreg (CFRP). The obtained material was used as a material for the skin layer.
Next, a preform Ip was prepared using the polyphenylene sulfide resin as the resin (B), in which 14 sheets of reinforcing fiber mat and 15 sheets of the resin (B) film (resin film) also used in Reference Example 1 were alternately arranged in order of [resin film/reinforcing fiber mat/resin film/.../resin film/reinforcing fiber mat/resin film]. Subsequently, a porous structure material was obtained through the processes (5) to (9) of Reference Example 1 except that the molding temperature in the process (5) was set to 320°C, the thickness in the process (7) was adjusted to 4.8 mm, and the preform Ip was used instead of the preform II.
An adhesive was applied to the surface of the obtained skin layer and integrated with the porous structure material to obtain a layered article. The properties are shown in Table 2.

(Reference Example 6)

A layered article was obtained in the same manner as in Reference Example 1 except that the layered structure of the preform II was made as [prepreg (0° direction)/prepreg (90° direction)/porous structure precursor/prepreg (90° direction)/prepreg (0° direction)], and the thickness of the layered article was adjusted to 5.2 mm. The properties are shown in Table 3.

(Reference Example 7)

An aluminum alloy (A5052) with a thickness of 0.2 mm was prepared as the skin layer.
Subsequently, a porous structure material was obtained through the processes (1) to (9) in the same manner as in Reference Example 1 except that the prepreg was not used as the skin layer.
An adhesive was applied to the surface of the aluminum alloy and integrated with the obtained porous structure material to obtain a layered article. The properties are shown in Table 3.

(Example 8)

A preform Ip was prepared using the polycarbonate resin as the resin (B), in which 14 sheets of reinforcing fiber mat and 15 sheets of the resin (B) film (resin film) also used in Reference Example 1 were alternately arranged in order of [resin film/reinforcing fiber mat/resin film/.../resin film/reinforcing fiber mat/resin film]. Subsequently, a porous structure material was obtained through the processes (5) to (9) of Reference Example 1 except that the molding temperature in the process (5) was set to 280°C, the thickness in the process (7) was adjusted to 4.8 mm, and the preform Ip was used instead of the preform II.
An adhesive was applied to the surface of the obtained skin layer and integrated with the porous structure material to obtain a layered article. The properties are shown in Table 3.

(Reference Example 9)

A preform Ip was prepared using resin film of the polypropylene resin as the resin (B), in which 16 sheets of reinforcing fiber mat used also in Reference Example 1 and 17 sheets of resin film were alternately arranged in order of [resin film/reinforcing fiber mat/resin film/.../resin film/reinforcing fiber mat/resin film]. Subsequently, a layered article was obtained in the same manner as in the processes (1) to (9) of Reference Example 1 except that the molding temperature was set to 200°C. The properties are shown in Table 3.

(Comparative Example 1)

A preform Ip was prepared using resin film of the polypropylene resin as the resin (B), in which 9 sheets of reinforcing fiber mat used also in Reference Example 1 and 10 sheets of resin film were alternately arranged in order of [resin film/reinforcing fiber mat/resin film/.../resin film/ reinforcing fiber mat/resin film]. Subsequently, a layered article was obtained in the same manner as in the processes (1) to (9) of Reference Example 1 except that the molding temperature was set to 200°C. The properties are shown in Table 4.

(Comparative Example 2)

A porous structure material was obtained in the same manner as in Comparative Example 1 except that the skin layer was not used. The properties are shown in Table 4.

(Comparative Example 3)

A skin layer made of prepreg (CFRP) cured by using two sheets of prepreg P3252S-10 was obtained in the same manner as in Example 5.
Using an expanded polypropylene resin as a porous structure material, the skin layer and the expanded polypropylene resin were integrated using an adhesive in the same manner as in Reference Example 7 to obtain a layered article. The properties are shown in Table 4.

[Consideration]

According to the present example, layered articles including a porous structure material containing discontinuous reinforcing fibers (A), resin (B) and voids (C), and a skin layer, the skin layer using a fiber-reinforced composite material having a bending modulus higher than that of the porous structure material (for example, prepreg of carbon fiber-reinforced plastic) and a metal material, exhibit excellent impact absorption by using the porous structure material having an elastic resilience from 50% compression of 1 MPa or more, and the layered articles in which shape deformation (dent) cannot be visually confirmed were obtained by setting the plastic deformation amount to 20 um or less in the falling-weight impact test performed on the surface on which the skin layer is formed. It was possible to confirm that shape deformation can be further suppressed while maintaining impact absorption, by increasing the thickness of the skin layer in Reference Example 2, and by increasing the density of the porous structure material in Reference Examples 3 and 4. In Example 5, it was possible to confirm that shape deformation can be further suppressed, by using PPS resin having excellent mechanical properties instead of the polyester resin as the resin (B). Further, in Reference Examples 1 to 4, since the polyester resin exhibiting rubber elasticity at room temperature was used as the resin (B), the layered article had also a relatively large elastic deformation rate and a soft feeling. Among them, Reference Example 1 had a softer feeling since the elastic resilience of the porous structure material was low, and Reference Example 4 had a harder feeling since the elastic resilience of the porous structure material was high as compared with Reference Example 1. In addition, since PPS resin, which is a super engineering plastic having high mechanical properties, was used in Example 5 and polycarbonate resin was used in Example 8, they had a hard feeling. In Reference Example 9, polypropylene resin, which is a general-purpose resin, was used, and by increasing the density of the porous structure material, it was possible to suppress shape deformation while maintaining impact absorption. In Reference Example 6, the properties of both sides of the layered article were evaluated, and it was possible to confirm that the same properties as in Reference Example 1 are exhibited, and flexibility of design can be increased when utilizing the layered article in a product by having a sandwich structure as in Reference Example 6.
On the other hand, in Comparative Examples 1 and 2, the elastic resilience of the porous structure material was 1 MPa or more, thus impact absorption could be exhibited; but the plastic deformation amount was larger than 20 um, and suppression of shape deformation could not be satisfied. Particularly in Comparative Example 2, since the skin layer was not used, shape deformation increased. In Comparative Example 3, since the elastic resilience of the porous structure material was 1 MPa or less, impact absorption also could not be exhibited.

From the above results, it is clear that the layered article within the scope of the present invention is a layered article in which shape deformation is suppressed, while having impact absorption for mitigating impact by external force.

[Table 1]

Table 1

| Type | - | Polyester resin | Polyphenylene sulfide resin | Polypropylene resin | Polycarbonate resin |
|---|---|---|---|---|---|
| Density | g/cm$^3$ | 1.19 | 1.34 | 0.92 | 1.20 |
| Melting point | °C | 208 | 280 | 165 | 150[*] |
| Rubber elasticity | Present or absent | Present | Absent | Absent | Absent |
| *Softening point | | | | | |

[Table 2]

Table 2

| Porous structure material | | | | Unit | Reference Example 1 | Reference Example 2 | Reference Example 3 | Reference Example 4 | Example 5 |
|---|---|---|---|---|---|---|---|---|---|
| Configuration | Reinforcing fiber (A) | | Type | – | Carbon fiber | Carbon fiber | Carbon fiber | Carbon fiber | Carbon fiber |
| | | | Volume content: Vf | % | 4.7 | 4.8 | 9.4 | 14.0 | 8.2 |
| | | | Average fiber length: Lf | mm | 6 | 6 | 6 | 6 | 6 |
| | | | Oriented angle: θf | ° | 4.0 | 4.0 | 2.7 | 1.6 | 4.0 |
| | | | Oriented angle: θs | ° | 40 | 40 | 40 | 40 | 41 |
| | | | Dispersion state | – | Monofilament random | Monofilament random | Monofilament random | Monofilament random | Monofilament random |
| | Resin (B) | | Type | – | Polyester resin | Polyester resin | Polyester resin | Polyester resin | Polyphenylene sulfide resin |
| | | | Volume content: Vr | % | 17.5 | 17.9 | 35.0 | 52.5 | 32.9 |
| | | | Coating of crossing point of reinforcing fiber | – | Present | Present | Present | Present | Present |
| | Void (C) | | Volume content: Va | % | 77.8 | 77.4 | 55.7 | 33.5 | 58.9 |
| | | | State | – | Continuous | Continuous | Continuous | Continuous | Continuous |
| Properties | | Elastic resilience | | MPa | 1.5 | 1.5 | 2.5 | 3.7 | 3.5 |
| | | Density: ρp | | g/cm³ | 0.29 | 0.30 | 0.58 | 0.87 | 0.59 |
| | | Thickness: tp | | mm | 4.8 | 4.8 | 4.8 | 4.8 | 4.8 |
| | | Bending modulus | | GPa | 0.05 | 0.05 | 0.12 | 0.22 | 5.0 |
| Skin layer | | | | | | | | | |
| Configuration | Material | | | – | PPg | PPg | PPg | PPg | PPg |
| Properties | Thickness: ts | | | mm | 0.2 | 0.3 | 0.2 | 0.2 | 0.2 |
| | Bending modulus | | | GPa | 20 | 37 | 20 | 20 | 20 |
| Layered article | | | | | | | | | |
| Configuration | Skin layer | | | – | One side | One side | One side | One side | One side |
| | Thickness ratio (tp/ts) | | | – | 24 | 16 | 24 | 24 | 24 |
| Properties | Plastic deformation amount | | | μm | 17 | 15 | 10 | 5 | 8 |
| | Plastic deformation rate | | | ×10⁻⁶ | 5 | 3 | 2 | 1 | 2 |
| | Elastic deformation rate | | | ×10⁻⁶ | 1300 | 700 | 400 | 120 | 180 |
| | Repulsion elasticity | | | % | 63.3 | 70.0 | 66.7 | 71.7 | 41.7 |
| | Density (lightness) | | | g/cm³ | 0.34 | 0.37 | 0.62 | 0.9 | 0.62 |

Table 3

| Porous structure material | | | | Unit | Reference Example 6 | Reference Example 7 | Example 8 | Reference Example 9 |
|---|---|---|---|---|---|---|---|---|
| Configuration | Reinforcing fiber (A) | | Type | − | Carbon fiber | Carbon fiber | Carbon fiber | Carbon fiber |
| | | | Volume content: Vf | % | 4.7 | 4.7 | 8.2 | 9.4 |
| | | | Average fiber length: Lf | mm | 6 | 6 | 6 | 6 |
| | | | Oriented angle: θf | ° | 4.0 | 4.0 | 4.0 | 3.8 |
| | | | Oriented angle: θs | ° | 40 | 40 | 40 | 40 |
| | | | Dispersion state | − | Monofilament random | Monofilament random | Monofilament random | Monofilament random |
| | Resin (B) | | Type | − | Polyester resin | Polyester resin | Polycarbonate resin | Polypropylene resin |
| | | | Volume content: Vr | % | 17.5 | 17.5 | 31.3 | 39.4 |
| | | | Coating of crossing point of reinforcing fiber | − | Present | Present | Present | Present |
| | Void (C) | | Volume content: Va | % | 77.8 | 77.8 | 60.6 | 51.3 |
| | | | State | − | Continuous | Continuous | Continuous | Continuous |
| Properties | | | Elastic resilience | MPa | 1.5 | 1.5 | 3.2 | 3.0 |
| | | | Density: ρp | g/cm³ | 0.29 | 0.29 | 0.52 | 0.52 |
| | | | Thickness: tp | mm | 4.8 | 4.8 | 4.8 | 4.8 |
| | | | Bending modulus | GPa | 0.05 | 0.05 | 4.7 | 4.4 |
| Skin layer | | | | | | | | |
| Configuration | Material | | | − | PPg | Aluminum alloy | PPg | PPg |
| Properties | Thickness: ts | | | mm | 0.2 | 0.2 | 0.2 | 0.2 |
| | Bending modulus | | | GPa | 20 | 45 | 20 | 20 |
| Layered article | | | | | | | | |
| Configuration | Skin layer | | | − | Both sides | One side | One side | One side |
| | Thickness ratio (tp/ts) | | | − | 12 | 24 | 24 | 24 |
| Properties | Plastic deformation amount | | | μm | 18 | 19 | 9 | 18 |
| | Plastic deformation rate | | | ×10⁻⁶ | 5 | 15 | 3 | 25 |
| | Elastic deformation rate | | | ×10⁻⁶ | 1300 | 1400 | 200 | 180 |
| | Repulsion elasticity | | | % | 63.3 | 65.0 | 48.3 | 46.4 |
| | Density (lightness) | | | g/cm³ | 0.39 | 0.38 | 0.55 | 0.54 |

[Table 4]

Table 4

| Porous structure material | | | Unit | Comparative Example 1 | Comparative Example 2 | Comparative Example 3 |
|---|---|---|---|---|---|---|
| Configuration | Reinforcing fiber (A) | Type | - | Carbon fiber | Carbon fiber | - |
| | | Volume content: Vf | % | 5.3 | 5.3 | 0 |
| | | Average fiber length: Lf | mm | 6 | 6 | - |
| | | Oriented angle: θf | ° | 4.0 | 4.0 | - |
| | | Oriented angle: θs | ° | 40 | 40 | - |
| | | Dispersion state | - | Monofilament random | Monofilament random | - |
| | Resin (B) | Type | - | Polypropylene resin | Polypropylene resin | Expanded polypropylene resin |
| | | Volume content: Vr | % | 23.1 | 23.1 | 33.3 |
| | | Coating of crossing point of reinforcing fiber | - | Present | Present | - |
| | Void (C) | Volume content: Va | % | 71.6 | 71.6 | 66.7 |
| | | State | - | Continuous | Continuous | Independent |
| Properties | | Elastic resilience | MPa | 2.8 | 2.8 | 0.7 |
| | | Density: ρp | g/cm³ | 0.30 | 0.30 | 0.30 |
| | | Thickness: tp | mm | 4.8 | 4.8 | 5 |
| | | Bending modulus | GPa | 3.8 | 3.8 | 0.07 |
| Skin layer | | | | | | |
| Configuration | | Material | - | PPg | - | PPg |
| Properties | | Thickness: ts | mm | 0.2 | - | 0.2 |
| | | Bending modulus | GPa | 20 | - | 20 |
| Layered article | | | | | | |
| Configuration | | Skin layer | - | One side | None | One side |
| | | Thickness ratio (tp/ts) | - | 24 | - | 25 |
| Properties | | Plastic deformation amount | μm | 40 | 80 | 70 |
| | | Plastic deformation rate | ×10⁻⁶ | 35 | 200 | 250 |
| | | Elastic deformation rate | ×10⁻⁶ | 200 | 4000 | 6500 |
| | | Repulsion elasticity | % | 33.3 | 26.7 | 20.0 |
| | | Density (lightness) | g/cm³ | 0.34 | 0.29 | 0.35 |

INDUSTRIAL APPLICABILITY

According to the present invention, it is possible to provide a layered article in which compression properties that are an index of impact absorption are exhibited and shape deformation is suppressed. Such a layered article of the present invention is preferably used for an automobile interior or exterior part, an electric or electronic device housing, a bicycle, a structure material for sports equipment, an aircraft interior material, or a constituent component for a medical device, in view of elastic resilience from compression and lightness. Further, it is preferably used for components and products touched by a person, and for example, it is preferably used for a handle or a seat surface of an automobile, or a bicycle, a grip, a frame, or a blow side of sports equipment. By being used in such places, the effect of the layered article of the present invention that can control feeling of impact by an external force can be utilized more significantly.

DESCRIPTION OF REFERENCE SIGNS

1 (1a, 1b, 1c, 1d, 1e, 1f): Single filament of reinforcing fiber (A)
2: Oriented angle ($\theta$s) of reinforcing fibers (A) in porous structure material
3: Resin (B)
4: Distance of line segment passing through respective centers of two crossing reinforcing fibers (A) and line segment connecting two crossing points of outermost surface of reinforcing fibers (A)
5: Distance of line segment passing through respective centers of two crossing reinforcing fibers (A) and line segment connecting two crossing points of outermost surface of resin (B) coating reinforcing fibers (A)

6:      Metal plate
7:      Test piece (layered article)
8:      Cylinder
9:      Steel ball
10:     Strain gauge
11:     Porous structure material
12:     Reinforing fiber chopped
13:     Dispersion medium
14:     Dispersing tank
15:     Stirrer
16:     Opening lock
17:     Paper making tank
18:     Mesh conveyor
19:     Conveyor
20:     Transportation unit

**Claims**

1.  A layered article comprising:

    a porous structure material containing discontinuous reinforcing fibers (A), resin (B) and voids (C); and
    a skin layer formed on a surface of the porous structure material, **characterised in that**
    the porous structure material has an elastic resilience from 50% compression of 1 MPa or more, as measured by the method of the description,
    the layered article has a plastic deformation amount of 15 um or less in a falling-weight impact test performed, according to the method of the description, on the surface on which the skin layer is formed,
    the resin (B) contains at least one selected from the group consisting of polyamide resin, polyphenylene sulfide resin, polyketone resin, polyetherketone resin, polyetheretherketone resin, polyetherketoneketone resin, polyethernitrile resin, fluororesin, liquid crystal polymer, polycarbonate resin, polymethyl methacrylate resin, polyphenylene ether resin, polyimide resin, polyamideimide resin, polyetherimide resin, polysulfone resin, and polyether sulfone resin, and
    the layered article has a ratio tp/ts of thickness tp of the porous structure material and thickness ts of the skin layer of 10 or more.

2.  The layered article according to claim 1, which has a tp/ts ratio of 30 or less.

3.  The layered article according to claim 1 or 2, which has a plastic deformation rate of $30 \times 10^{-6}$ or less in a falling-weight impact test performed, according to the method of the description, on the surface on which the skin layer is formed.

4. The layered article according to any one of claims 1 to 3, which has an elastic deformation rate of $100 \times 10^{-6}$ or more in a falling-weight impact test performed, according to the method of the description, on the surface on which the skin layer is formed.

5. The layered article according to any one of claims 1 to 4, which has a repulsion elasticity of 30% or more in a falling-weight impact test performed, according to the method of the description, on the surface on which the skin layer is formed.

6. The layered article according to any one of claims 1 to 5, wherein the skin layer has a bending modulus higher than that of the porous structure material.

7. The layered article according to any one of claims 1 to 6, which has a sandwich structure in which the skin layers are arranged on both surfaces of the porous structure material.

8. The layered article according to any one of claims 1 to 7, wherein the porous structure material contains

the reinforcing fiber (A) in a ratio within a range of 0.5% by volume or more and 55% by volume or less, the resin (B) within a range of 2.5% by volume or more and 85% by volume or less, and the voids (C) within a range of 10% by volume or more and 97% by volume or less.

9. The layered article according to any one of claims 1 to 8, wherein the skin layer contains at least one selected from the group consisting of stainless steel, aluminum alloy, magnesium alloy, titanium alloy, fiber-reinforced thermoplastic resin, and fiber-reinforced thermosetting resin.

10. The layered article according to any one of claims 1 to 9, wherein the porous structure material is an open-cell porous structure material having continuous voids (C) formed therein.

11. The layered article according to any one of claims 1 to 10, wherein, in the porous structure material, crossing points of the reinforcing fibers (A) that are in contact with each other are coated with the resin (B).

12. The layered article according to any one of claims 1 to 11, wherein the reinforcing fibers (A) are dispersed in a nearly monofilament form and in a random manner, wherein the nearly monofilament form is a state in which reinforcing fiber monofilaments are present as small fineness as less than 500 strands.

13. A sports equipment which partially includes the layered article according to any one of claims 1 to 12.

14. The sports equipment according to claim 13, which has a blow side, and the blow side is formed by the layered article.

**Patentansprüche**

1. Schichtgegenstand, der Folgendes umfasst:

ein poröses Strukturmaterial, das diskontinuierliche Verstärkungsfasern (A), Harz (B) und Hohlräume (C) umfasst; und eine Außenschicht, die auf einer Oberfläche des porösen Strukturmaterials ausgebildet ist, **dadurch gekennzeichnet, dass** das poröse Strukturmaterial eine gemäß dem Verfahren der Beschreibung gemessene elastische Federkraft bei 50 % Kompression von 1 MPa oder mehr aufweist, der Schichtgegenstand in einem gemäß dem Verfahren der Beschreibung durchgeführten Fallgewicht-Aufpralltest auf der Oberfläche, auf der die Außenschicht ausgebildet ist, ein Ausmaß an plastischer Verformung von 15 μm oder weniger aufweist, das Harz (B) zumindest eines, ausgewählt aus der Polyamid-Harz, Polyphenylensulfid-Harz, Polyketon-Harz, Polyetherketon-Harz, Polyetheretherketon-Harz, Polyetherketonketon-Harz, Polyethernitril-Harz, Fluorharz, flüssigkristallinem Polymer, Polycarbonat-Harz, Polymethylmethacrylat-Harz, Polyphenylenether-Harz, Polyimid-Harz, Polyamidimid-Harz, Polyetherimid-Harz, Polysulfon-Harz und Polyethersulfon-Harz bestehenden Gruppe enthält und
der Schichtgegenstand ein Verhältnis tp/ts zwischen den Dicke tp des porösen Strukturmaterials und der Dicke ts der Außenschicht von 10 oder mehr aufweist.

2. Schichtgegenstand nach Anspruch 1, die ein tp/ts-Verhältnis von 30 oder weniger aufweist.

3. Schichtgegenstand nach Anspruch 1 oder 2, der in einem gemäß dem Verfahren der Beschreibung durchgeführten Fallgewicht-Aufpralltest auf der Oberfläche, auf der die Außenschicht ausgebildet ist, eine plastische Verformungsrate von $30 \times 10^{-6}$ oder weniger aufweist.

4. Schichtgegenstand nach einem der Ansprüche 1 bis 3, der in einem gemäß dem Verfahren der Beschreibung durchgeführten Fallgewicht-Aufpralltest auf der Oberfläche, auf der die Außenschicht ausgebildet ist, eine elastische Verformungsrate von $100 \times 10^{-6}$ oder mehr aufweist.

5. Schichtgegenstand nach einem der Ansprüche 1 bis 4, der in einem gemäß dem Verfahren der Beschreibung durchgeführten Fallgewicht-Aufpralltest auf der Oberfläche, auf der die Außenschicht ausgebildet ist, eine Rückstoßelastizität von 30 % oder mehr aufweist.

6. Schichtgegenstand nach einem der Ansprüche 1 bis 5, wobei die Außenschicht einen höheren Biegemodul aufweist als das poröse Strukturmaterial.

7. Schichtgegenstand nach einem der Ansprüche 1 bis 6, der eine Sandwich-Struktur aufweist, bei der die Außenschichten auf beiden Oberflächen des porösen Strukturmaterials angeordnet sind.

8. Schichtgegenstand nach einem der Ansprüche 1 bis 7, wobei das poröse Strukturmaterial Folgendes enthält:

   die Verstärkungsfaser (A) in einem Verhältnis in einem Bereich von 0,5 Vol.-% oder mehr bis 55 Vol.-% oder weniger
   das Harz (B) in einem Bereich von 2,5 Vol.-% oder mehr bis 85 Vol.-% oder weniger und
   die Hohlräume (C) in einem Bereich von 10 Vol.-% oder mehr bis 97 Vol.-% oder weniger.

9. Schichtgegenstand nach einem der Ansprüche 1 bis 8, wobei die Außenschicht zumindest eines, ausgewählt aus der aus Edelstahl, Aluminiumlegierung, Magnesiumlegierung, Titanlegierung, faserverstärktem thermoplastischen Harz und faserverstärktem Duroplast bestehenden Gruppe enthält.

10. Schichtgegenstand nach einem der Ansprüche 1 bis 9, wobei das poröse Strukturmaterial ein offenzelliges poröses Strukturmaterial mit darin ausgebildeten durchgehenden Hohlräumen (C) ist.

11. Schichtgegenstand nach einem der Ansprüche 1 bis 10, wobei im porösen Strukturmaterial die Kreuzungspunkte zwischen den Verstärkungsfasern (A), die miteinander in Kontakt stehen, mit dem Harz (B) beschichtet sind.

12. Schichtgegenstand nach einem der Ansprüche 1 bis 11, wobei die Verstärkungsfasern (A) annähernd in Monofilform vorliegen und statistisch verteilt sind, wobei die annähernde Monofilform ein Zustand ist, in dem Verstärkungsfaser-Monofile mit einem geringen Feinheitsgrad von weniger als 500 Strängen vorliegen.

13. Sportausrüstung, die teilweise einen Schichtgegenstand nach einem der Ansprüche 1 bis 12 umfasst.

14. Sportausrüstung nach Anspruch 13, die eine Schlagseite aufweist und wobei die Schlagseite von dem Schichtgegenstand gebildet wird.

**Revendications**

1. Article stratifié, comprenant :

   un matériau de structure poreuse contenant des fibres de renforcement discontinues (A), de la résine (B) et des vides (C) ; et
   une couche de peau formée sur une surface du matériau de structure poreuse, **caractérisée en ce que**

le matériau de structure poreuse présente une résilience élastique à partir de 50 % de compression de 1 MPa ou plus, telle que mesurée par le procédé de la description,

l'article stratifié présente une quantité de déformation plastique de 15 $\mu$m ou moins dans un test d'impact de chute de poids effectué, selon le procédé de la description, sur la surface sur laquelle la couche de peau est formée,

la résine (B) contient au moins une choisie dans le groupe constitué d'une résine polyamide, d'une résine de sulfure de polyphénylène, d'une résine de polycétone, d'une résine de polyéthercétone, d'une résine de polyétheréthercétone, d'une résine de polyéthercétonecétone, d'une résine de polyéthernitrile, d'une résine fluorée, d'un polymère à cristaux liquides, d'une résine de polycarbonate, d'une résine de polyméthacrylate de méthyle, d'une résine d'éther de polyphénylène , d'une résine de polyimide, d'une résine de polyamideimide, d'une résine de polyétherimide, d'une résine de polysulfone et d'une résine de polyéthersulfone, et

l'article stratifié présente un rapport tp/ts de l'épaisseur tp du matériau de structure poreuse et de l'épaisseur ts de la couche de peau de 10 ou plus.

2. Article stratifié selon la revendication 1, qui présente un rapport tp/ts de 30 ou moins.

3. Article stratifié selon la revendication 1 ou 2, qui présente un taux de déformation plastique de $30 \times 10^{-6}$ ou moins dans un test d'impact de chute de poids effectué, selon le procédé de la description, sur la surface sur laquelle la couche de peau est formée.

4. Article stratifié selon l'une quelconque des revendications 1 à 3, qui présente un taux de déformation élastique de $100 \times 10^{-6}$ ou plus dans un test d'impact de chute de poids effectué, selon le procédé de la description, sur la surface sur laquelle la couche de peau est formée.

5. Article stratifié selon l'une quelconque des revendications 1 à 4, qui présente une élasticité de répulsion de 30 % ou plus dans un test d'impact de chute de poids effectué, selon le procédé de la description, sur la surface sur laquelle la couche de peau est formée.

6. Article stratifié selon l'une quelconque des revendications 1 à 5, dans lequel la couche de peau présente un module de flexion supérieur à celui du matériau de structure poreuse.

7. Article stratifié selon l'une quelconque des revendications 1 à 6, qui présente une structure en sandwich dans laquelle les couches superficielles sont agencées sur les deux surfaces du matériau de structure poreuse.

8. Article stratifié selon l'une quelconque des revendications 1 à 7, dans lequel le matériau de structure poreuse contient

la fibre de renforcement (A) selon un rapport dans une plage de 0,5 % en volume ou plus et de 55 % en volume ou moins,

la résine (B) dans une plage de 2,5 % en volume ou plus et de 85 % en volume ou moins, et

les vides (C) dans une plage de 10 % en volume ou plus et de 97 % en volume ou moins.

9. Article stratifié selon l'une quelconque des revendications 1 à 8, dans lequel la couche de peau contient au moins un choisi dans le groupe constitué d'acier inoxydable, d'alliage d'aluminium, d'alliage de magnésium, d'alliage de titane, de résine thermoplastique renforcée de fibres et de résine thermodurcissable renforcée de fibres.

10. Article stratifié selon l'une quelconque des revendications 1 à 9, dans lequel le matériau de structure poreuse est un matériau de structure poreuse à cellules ouvertes présentant des vides continus (C) formés en son sein.

11. Article stratifié selon l'une quelconque des revendications 1 à 10, dans lequel, dans le matériau de structure poreuse, des points de croisement des fibres de renforcement (A) qui sont en contact les unes avec les autres sont revêtus de la résine (B).

12. Article stratifié selon l'une quelconque des revendications 1 à 11, dans lequel les fibres de renforcement (A) sont dispersées sous une forme presque monofilamentaire et de manière aléatoire, dans lequel la forme presque monofilamentaire est un état dans lequel les monofilaments de fibres de renforcement sont présents avec une faible finesse inférieure à 500 brins.

13. Équipement de sport qui inclut partiellement l'article stratifié selon l'une quelconque des revendications 1 à 12.

14. Équipement de sport selon la revendication 13, qui présente un côté de souffle, et le côté de souffle est formé par l'article stratifié.

【Fig.1】 （a）

（b）

【Fig. 2】

【Fig. 3】

(a)

(b)

【Fig. 4】

(a)

(b)

【Fig. 5】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004217829 A
- WO 2015029634 A
- WO 2017110532 A
- WO 2017110528 A
- WO 2006028107 A